# EUROPÄISCHE PATENTSCHRIFT

(11) **EP 1 100 833 B1**
(45) Veröffentlichungstag und Bekanntmachung des Hinweises auf die Patenterteilung: **30.10.2002**
(21) Anmeldenummer: 99939448.9
(22) Anmeldetag: 03.08.1999
(51) Int. Cl.: C08F 8/00, C09D 5/03

(54) **MIT ENERGIEREICHER STRAHLUNG UND/ODER THERMISCH HÄRTBARE PULVERLACKE MIT FUNKTIONALISIERTER GRUNDSTRUKTUR**
HIGH POWERED RADIATION AND/OR THERMAL HARDENING COATING POWDER WITH A FUNCTIONALIZED BASE STRUCTURE
LAQUE EN POUDRE A STRUCTURE DE BASE FONCTIONNALISEE, DURCISSABLE PAR UN RAYONNEMENT HAUTE ENERGIE ET/OU PAR LA CHALEUR

(30) Priorität: 07.08.1998 DE 19835849
(43) Veröffentlichungstag der Anmeldung: 23.05.2001
(73) Patentinhaber: BASF Coatings AG, 48165 Münster (DE)
(72) Erfinder: BLUM, Rainer, D-67069 Ludwigshafen (DE); PRIETO, Rodriguez, Jorge, D-48308 Senden (DE)
(74) Vertreter: Isenbruck, Günter, Dr.
(86) Internationale Anmeldenummer: EP9905625
(87) Internationale Veröffentlichungsnummer: WO00008067

(56) Entgegenhaltungen:
- EP-A- 0 346 982
- EP-A- 0 636 669
- EP-A- 0 844 286
- WO-A-93/25596
- DE-A- 1 570 266
- US-A- 5 252 682

## Beschreibung

Die Erfindung betrifft ein Bindemittel für durch energiereiche Strahlung und/oder thermisch härtbare Pulverlacke, den das Bindemittel aufweisenden Pulverlack selbst sowie seine erfindungsgemäße Verwendung.

Unter UV-Licht härtbare Lacke für die Anwendung in flüssiger Form und Pulverlacke gewinnen aus Gründen der Lösungsmitteleinsparung immer mehr Einsatzgebiete. Ein Hauptproblem bei bekannten UV-Lacken ist jedoch die Inhibierung der Härtung an der Lackoberfläche durch Luftsauerstoff. Diese Inhibierung muß durch Lampen mit sehr hoher Energiedichte und einer Beschleunigung der Härtung durch Amincoinitiatoren überspielt werden. Diese Amine sind häufig die Ursache für Geruchsbelästigungen.

Bei UV-Pulverlacken ergeben sich zusätzlich weitere Probleme aus den widersprüchlichen Forderungen nach guter Blockfestigkeit der Pulver bei der Lagerung und gutem Verlauf des geschmolzenen Lackfilms. Für gute Blockfestigkeit sollten Glasübergangstemperatur und Schmelzpunkt möglichst hoch sein, für guten Verlauf und die Anwendung auf thermosensiblen Substraten aber möglichst niedrig, um eine Härtungsreaktion vor der Ausbildung einer optimalen Oberflächenglätte und eine Schädigung des Substrates zu vermeiden. Ebenfalls zur Verbesserung der Oberflächenglätte sollte die Schmelze eine niedrige Viskosität aufweisen und die Reaktion erst nach einer Verzögerung einsetzen. Diese Vorstellungen lassen sich mit Pulverlacken, deren Härtung auf einer der bekannten thermisch aktivierten Reaktionen zwischen Harz und Härter, z.B. Polyepoxidharz und Dicarbonsäurehärter beruhen, nur schwer realisieren, weil gleichzeitig mit dem Schmelzvorgang schon eine viskositätserhöhende Reaktion einsetzt. Bei strahlenhärtbaren Pulverlacken hingegen sollte eine Trennung von Aufschmelz-vorgang und Vernetzung möglich sein. Zur Erfüllung dieses Erfordernisses sind im Stand der Technik verschiedene Ansätze bekannt geworden.

Die US-A-4,129,488 und US-A-4,163,810 offenbaren UV-härtbare Pulverlacke mit speziellen räumlichen Anordnungen ethylenisch ungesättigter Polymere. Dabei besteht das Bindemittel aus einem Epoxid-Polyester-Polymer, bei dem das Epoxid-Addukt in der Weise räumlich angeordnet wird, daß es mittels einer linearen Polymerkette in räumlicher Entfernung von dem Polyesteraddukt angeordnet ist. Das Polymer enthält zusätzlich einen chemisch gebundenen Fotoinitiator.

In der EP-A 0 650 978, EP-A 0 650 979 und EP-A 0 650 985 werden Copolymerisate offenbart, deren wesentlicher Bestandteil ein verhältnismäßig hoher Anteil der Monomeren mit dem Strukturelement der Methacrylsäure ist, und die als Bindemittel für mit UV-Licht härtbare Pulverlacke verwendbar sind. Die Copolymerisate zeichnen sich durch eine relativ enge Molekulargewichtsverteilung aus.

Durch die EP-A 0 410 242 sind Bindemittel für UV-härtbare Pulverlacke bekannt, die aus Polyurethanen bestehen, die bestimmte (Meth)acryloylgruppen aufweisen, ohne Vernetzerkomponente oder Peroxide vernetzt werden können und daher lagerstabil sind. Für die Vernetzung mittels UV-Bestrahlung ist die Zugabe von Fotoinitiatoren erforderlich.

Des weiteren ist durch die EP-A 0 636 669 ein durch UV-Licht härtbares Bindemittel für Pulverlacke bekannt, das aus ungesättigten Polymeren besteht, die Cyclopentadien enthalten können, und einem Vernetzungsmittel, das Vinylether-, Vinylester- oder (Meth)acrylgruppen aufweist.

Die WO-A-93/25596 offenbart Polyacrylate als Decklacke für Automobile, die auf unterschiedlichste Art mit Doppelbindungen funktionalisiert sind.

In der DE-A 42 26 520 werden flüssige Zusammensetzungen offenbart, die aus ungesättigtem Polymer in Form ungesättigter Polyester und Verbindungen besteht, die (Meth)acryloylgruppen und/oder Vinylethergruppen enthalten. Diese Zusammensetzungen können sowohl mittels Radikalbildern als auch durch Strahlenhärtung vernetzt und als Bindemittel für Lacke verwendet werden. Bei der Vernetzung durch UV-Strahlung ist es erforderlich, Fotoinitiatoren hinzuzufügen.

Bei den UV-Lacken gemäß dem genannten Stand der Technik ergeben sich Probleme aus der Notwendigkeit, für eine hohe Lichtempfindlichkeit und zur Überspielung der bekannten Sauerstoffinhibierung der Oberfläche zusätzlich Coinitiatoren, in der Regel Amine, einzusetzen. Die Spaltprodukte dieser Fotoinitiatoren verbleiben in den gehärteten Lackierungen und sind Ursache von Geruchsbelästigungen.

Des weiteren ist durch die EP-A-0 322 808 ein Stand der Technik bekannt geworden, der ein flüssiges, durch energiereiche Strahlung härtbares Bindemittel offenbart, das aus einer Mischung einer ethylenisch ungesättigten Polyester-Komponente, die auch ein ethylenisch ungesättigtes Polyester-Oligomeres enthalten kann, und einer nicht polymerisierten Vinylether-Komponente besteht. Dabei wird die Vinylether-Komponente so ausgewählt, daß sie im Durchschnitt zumindest zwei Vinylether-Gruppen pro Molekül der Vinylether-Komponente enthält, die mit den ethylenischen Doppelbindungen der Polyester-Komponente reagieren können.

Ausgehend von diesem Stand der Technik lag der vorliegenden Erfindung die Aufgabe zugrunde, ein Bindemittel für durch energiereiche Strahlung und/oder thermisch härtbare Pulverlacke bereitzustellen, bei dessen Verwendung keine Sauerstoffinhibierung der Lackoberfläche auftritt, so daß auf die Verwendung von geruchsbelästigenden Aminen und anderen Coinitiatoren verzichtet werden kann.

Diese Aufgabe wird erfindungsgemäß durch ein Bindemittel gelöst, das jeweils endund/oder seitenständig mindestens eine Vinylethergruppe a) und mindestens eine von den Vinylethergruppen a) verschiedene, mit den Gruppen a) coreaktive, bevorzugt copolymerisierbare Gruppe b) aufweist, wobei im Durchschnitt mindestens eine Vinylethergruppe a) und eine coreaktive Gruppe b) pro Oligomer- oder Polymermolekül vorhanden sind.

Pulverlacke, die ein solches Bindemittel aufweisen, zeigen in überraschender Weise eine hohe UV-Reaktivität und keine Sauerstoffinhibierung der Oberfläche bei der Härtung an Luft. Dies hat den Vorteil, daß auf die Verwendung von Aminen und anderen Coinitiatoren verzichtet werden kann.

Auch die Härtung zu einem B-Zustand, d.h. einem teilgehärtetem Zustand, bei dem die Härtung unterbrochen ist und später wieder gestartet werden kann, ist möglich.

Zu erwähnen ist im Zusammenhang mit dem erfindungsgemäßen Bindemittel das dem Fachmann an sich bekannte Problem, daß bei dem üblichen, unter statistischen Reaktionsbedingungen stattfindenden Polymeraufbau bzw. bei polymeranaloger Funktionalisierung auch Polymermoleküle gebildet werden können, die nur in der einen Art, z.B. mit den Vinylethergruppen a) oder überhaupt nicht funktionalisiert sind. Da solche weniger oder überhaupt nicht funktionalisierten polymeren Grundstrukturen die Eigenschaften der erfindungsgemäßen Polymere beeinträchtigen können, ist es bevorzugt, das Herstellungsverfahren so zu steuern, daß möglichst geringe Anteile solcher weniger oder überhaupt nicht fanktionalisierten polymeren Grundstrukturen entstehen. Geeignete Methoden hierfür sind dem Polymerfachmann bekannt. Dazu gehört u.a. die Verwendung von Überschüssen unter späterer Wiederabtrennung nicht umgesetzter Stoffe oder gegebenenfalls der Verbleib des Überschusses im fertigen Lackbindemittel. Es hat sich gezeigt, daß eventuell dennoch verbleibende Restanteile den erfindungsgemäßen Erfolg beim Einsatz der beanspruchten Bindemittel im wesentlichen nicht beeinträchtigen.

Zurückgeführt wird die bei der Verwendung des erfindungsgemäßen Bindemittels in durch energiereiche Strahlung und/oder thermisch härtbaren Pulverlacken zu beobachtende überragend hohe UV-Reaktivität ohne Auftreten einer Sauerstoffinhibierung der Oberfläche auf die Tatsache, daß bei den erfindungsgemäßen Bindemitteln durch Funktionalisierung der polymeren Grundstruktur eine Selbstvernetzung stattfinden kann, während im Stand der Technik Bindemittelzusammensetzungen von Stoffgemischen vorliegen, die erst untereinander vernetzt werden müssen.

Das schematische Strukturprinzip der erfindungsgemäßen Bindemittel kann, wie nachfolgend dargestellt, veranschaulicht werden: 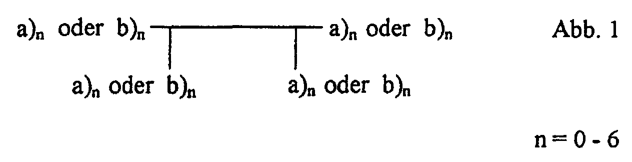 Gemäß dem dargestellten Strukturprinzip können die funktionellen Gruppen a) und b) an der gleichen Stelle und/oder verschiedenen Stellen mit der polymeren Grundstruktur verknüpft sein, sowie diese beliebig terminieren. Die funktionellen Gruppen a) und b) können auch an der gleichen Gruppe mehr als einmal vorhanden sein. So können z.B. an einer terminalen NH₂-Gruppe zwei Glycidylmethacrylate reagieren oder an einer terminalen Epoxidgruppe ein Molekül Ethanolamindivinylether. Des weiteren können polymere Grundstrukturen, die seiten- oder endständig an der gleichen Stelle mehrere OH-Gruppen aufweisen, vinyliert werden. Der Wert für n liegt dabei zwischen 0 und 6, bevorzugt liegt er bei 1 oder 2.

Die oligomere oder polymere Grundstruktur kann durch C-C-Verknüpfungen gebildet sein, die Doppel- und/oder Dreifachbindungen aufweisen und/oder ausgewählt sind aus Ester-, Ether-, Urethan-, Amid-, Imid-, Imidazol-, Keton-, Sulfid-, Sulfon-, Acetal-, Harnstoff-, Carbonat- und Siloxanverknüpfungen.

Des weiteren kann die oligomere oder polymere Grundstruktur linear, verzweigt, ringförmig oder dendrimer aufgebaut sein.

Vorzugsweise werden die erfindungsgemäßen Bindemittel durch polymeranaloge Umsetzung von funktionellen Polymeren mit Verbindungen, die funktionelle Gruppen a) oder b) und mindestens eine weitere Gruppe aufweisen, die mit den funktionellen Gruppen der oligomeren oder polymeren Grundstruktur reagieren können, erhalten.

Als coreaktive, vorzugsweise copolymerisierbare funktionelle Gruppe b) kommen insbesondere Maleinat-, Fumarat-, (Meth)acrylat-, Allyl-, Epoxid-, Alkenyl-, Cycloalkenyl-, Vinylaryl- und Cinnamatgruppen und/oder bevorzugt Struktureinheiten der allgemeinen Formel I in Betracht.

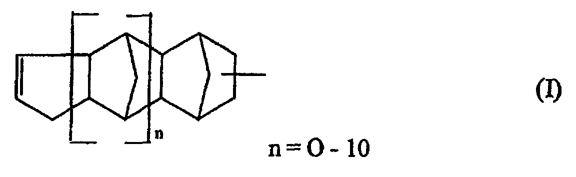

Bei der Verwendung von Struktureinheiten der allgemeinen Formel I als funktionelle Gruppe b) zeichnen sich die Pulverlacke bei der Herstellung durch eine geringe Empfindlichkeit gegen Wärme und eine trotzdem gute Einbrennhärtbarkeit unter Luftsauerstoff, kurze Härtungszeiten bei kombinierter Anwendung von Wärme, UV-Licht, gute Blockfestigkeit der Pulver bei Lagerung und sehr gute Oberflächenglätte der daraus erhaltenen Lackierungen aus.

In einer bevorzugten Ausführungsform können die Struktureinheiten der allgemeinen Formel I in den coreaktiven Gruppen b) in Form von Estern des (Oligo)-dihydrodicyclopentadienols mit mono- oder polyfunktionellen Carbonsäuren der allgemeinen Formel II eingebaut sein.

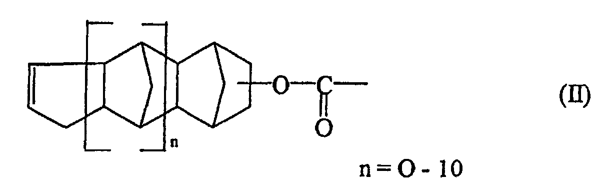

Eine wichtige erfindungsgemäße Polymerklasse stellen die **Epoxidharze** dar. Als Grundstrukturen eignen sich mehrfach epoxyfunktionelle polymere, oligomere oder monomere Verbindungen, z.B. vom Typ der Bisphenol-A-Epoxidverbindungen oder vom Typ der Bisphenol-A-Epoxidharze, durch Reaktion mit Verbindungen, die mit Epoxidgruppen reaktiv sind. Die Epoxidgruppen können funktionalisiert werden mit Verbindungen, die Vinylethergruppen a) und damit coreaktive Gruppen b) und mindestens eine weitere Gruppe aufweisen, die mit Epoxiden reagieren kann. Beispiele für erfindungsgemäße Verbindungen dieser Art sind die Produkte aus partiellen Umsetzungen von an sich bekannten kommerziellen Epoxidharzen mit (Meth)-acrylsäure und/ oder Verbindungen gemäß der nachfolgend angegebenen allgemeinen Formel III und einer Aminovinylverbindung, wie Aminobutylvinylether oder Diethanolamindivinylether oder die Umsetzungsprodukte von Polyacrylaten mit copolymer eingebautem Glycidyl(meth)-acrylat mit solchen Verbindungen oder die Umsetzungsprodukte von Polyurethanharzen, die unter Mitverwendung von hydroxyfunktionellen Epoxidverbindungen, z.B. Glycid(2,3-Epoxypropanol-1), mit solchen Verbindungen erhalten werden.

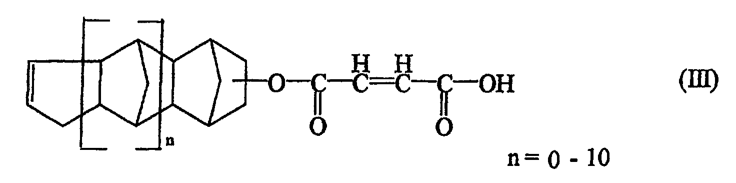

**Polyurethanharze** stellen eine weitere wichtige erfindungsgemäße Polymerklasse dar, die durch Umsetzung von mehrfach funktionellen Isocyanatverbindungen mit Acrylaten und Vinylverbindungen, Hydroxy- oder Aminoacrylaten und Hydroxyoder Aminovinylaten, gegebenenfalls unter Mitverwendung von weiteren, mit Isocyanatgruppen reaktiven Verbindungen, wie Hydroxyverbindungen, erhalten werden.

Als Isocyanatverbindungen können handelsübliche und an sich bekannte Verbindungen verwendet werden, wie z.B. Toluylendiisocyanat (TDI), 4,4'-Methylendi(phenylisocyanat) (MDI), Isophorondiisocyanat (IPDI), Hexamethylendiisocyanat (HMDI), weitere C₂-C₁₂-Alkylendiisocyanate, weitere C₂-C₁₂-Cycloalkylendiisocyanate, Naphthalindiisocyanate, weitere Alkaryldiisocyanate, wie Phenylendiisocyanate, Diphenyldiisocyanate sowie die verschiedenen Stellungsisomeren dieser Verbindungen. Außerdem kommen die von diesen Isocyanaten abgeleiteten, höher isocyanatfunktionellen Biuretisierungs- und Isocyanuratisierungsprodukte, wie die über Uretdiongruppen trimerisierten bzw. oligomerisierten Isocyanate, und die aus den einfachen oben genannten Isocyanaten durch Dimerisierung bzw. Oligomerisierung mit Aminen oder Wasser erhältlichen höheren Isocyanate in Frage.

Von besonderer Bedeutung sind Polyisocyanate, die Diisocyanuratgruppen aufweisen. Hier sind besonders die Trimerisierungsprodukte der oben genannte Diisocyanate zu erwähnen.

Zur Herstellung der erfindungsgemäßen Bindemittel werden die genannten Isocyanate oder Mischungen dieser Isocyanate mit solchen Verbindungen umgesetzt, die mit den Isocyanaten reaktiv sind und neben den mit Isocyanaten reaktiven Gruppen des weiteren die Gruppen a) und b) aufweisen. Es können auch solche mit Isocyanaten reaktiven Verbindungen mitverwendet werden, die die Gruppen a) oder b) nicht aufweisen. Die mit den Isocyanaten umzusetzenden Verbindungen können einfach oder mehrfach mit Isocyanaten reaktiv, linear, verzweigt, aromatisch, cycloaliphatisch, araliphatisch, heterocyclisch und/oder beliebig substituiert sein. Als Beispiele werden C₁-C₂₀-Hydroxyalkylvinylether, wie Hydroxyethylmonovinylether, Hydroxybutylmonovinylether, Cyclohexandimethanolmonovinylether, Hexandiolmonovinylether, Ethylenglykolmonovinylether, Propylenglykolmonovinylether und Polyalkylenglykolmonovinylether sowie Diethanolamindivinylether, Aminopropylvinylether, C₁-C₂₀-Hydroxyalkyl(meth)-acrylester, wie Hydroxyethylacrylat, Hydroxybutylacrylat sowie Polyalkylen-glykolmonoacrylate, Allylalkohol, Dihydrodicyclopentadienol, Hydroxylgruppen aufweisende Addukte von Dicyclopentadienol (DCPD) an Glykole gemäß der weiter unter angegebenen allgemeinen Formel V, Ethylenglykol, Polyethylenglykole, Propylenglykol, Polypropylenglykole, Butandiolisomere, Hexandiol, Neopentylglykol, Trimethylolpropan, Glycerin, Pentaerythrit, ungesättigte Hydroxylverbindungen, wie Allylalkohol, teilveretherte polyfunktionelle Hydroxylverbindungen, z.B. Trimethylolethanmonoallylether, Trimethylolethandiallylether, Trimethylolpropanmonoallylether, Trimethylolpropandiallylether, Pentaerythritmonoallylether, Pentaerythritdiallylether, Alkylendiole, wie Buten-2-diol-1,4 und oxalkylierte Alkylendiole, bevorzugt ethoxyliertes und propoxyliertes Buten-2-diol-1,4 mit einem Alkoxylierungsgrad von 1 bis 10 Alkylenoxid pro Mol Buten-2-diol-1,4, genannt.

Die Auswahl und Kombination der jeweils gewünschten Ausgangsverbindungen hängt von den gewünschten Eigenschaften des daraus herzustellenden Bindemittels ab. Die Einstellung eines gewünschten Molekulargewichts und gegebenenfalls der Viskosität kann durch Mitverwendung monofunktioneller Verbindungen erfolgen. Die vorgenannten Maßnahmen sowie die Auswahl einer geeigneten Polymerisationstechnik ggf. unter Mitverwendung von Lösungsmitteln und die Steuerung der Polymerisation durch Katalysatoren sind dem Fachmann aufgrund seines Fachwissens möglich.

Der Begriff Polyurethane soll im Rahmen dieser Erfindung auch solche Verbindungen umfassen, deren Hauptkette nicht nur über Urethanverbindungen verknüpft ist, sondern auch solche Verbindungen, die Ester- oder Etherkettenglieder aufweisen, d.h. die Polyesterurethane und Polyetheruretliane.

Gesättigte und ungesättigte **Polyesterharze,** die erfindungsgemäß mit Gruppen a) und b) funktionalisiert sind, stellen eine weitere wichtige Polymerklasse für die erfindungsgemäßen Bindemittel dar. Zum Aufbau der Polyesterharze kommen dabei die üblichen und bekannten Carbonsäuren mit > 2 Carboxylgruppen und/oder deren Anhydride und/oder deren Ester und Hydroxylverbindungen mit > 2 OH-Gruppen in Frage. Es können auch monofunktionelle Verbindungen mitverwenden werden, um z.B. das Molekulargewicht der Polykondensate zu regulieren.

Als Carbonsäurekomponenten kommen z.B. α, β-ethylenisch ungesättigte Carbonsäuren, wie Maleinsäure, Maleinsäureanhydrid, Fumarsäure, Itaconsäure, Citraconsäure, gesättigte aliphatische Carbonsäuren bzw. deren Anhydride, wie Bernsteinsäure, Adipinsäure, Korksäure, Sebacinsäure, Azelainsäure, natürliche Fettsäuren und polymerisierte natürliche Fettsäuren, wie Leinölfettsäure, Dimerund Polymerleinölfettsäure, Rizinusöl, Rizinusölfettsäure, gesättigte cycloaliphatische Carbonsäuren bzw. deren Anhydride, wie Tetrahydrophthalsäure, Hexahydrophthalsäure, Endomethylentetrahydrophthalsäure, Norbonendicarbonsäure, aromatische Carbonsäuren bzw. deren Anhydride, wie Phthalsäure in ihren Isomerformen, auch Tri- und Tetracarbonsäuren bzw. deren Andydride, wie Trimellithsäure, Pyromellithsäure, mit Allylalkohol teilveresterte Polycarbonsäuren, z.B. Trimellithsäuremonoallylester oder Pyromellithsäurediallylester in Frage, wobei Benzophenoncarbonsäuren von besonderer Bedeutung sind, weil über diese copolymer UV-Licht-anregbare Strukturen eingebaut werden können.

Als Hydroxylkomponenten kommen z.B. ggf. alkoxylierte, mindestens zweiwertige aliphatische und/oder cycloaliphatische Alkohole wie Ethylenglykol, Propylenglykol, Polyethylenglykole, Polypropylenglykole, Butandiolisomere, Hexandiol, Trimethylolpropan, Pentaerythrit, Neopentylglykol, Cyclohexandimethanol, Bisphenol A, hydriertes Bisphenol A, OH-polyfunktionelle Polymere, wie hydroxylgruppenmodifizierte Polybutadiene oder hydroxylgruppentragende Polyurethanprepolymere, Glyzerin, Mono- und Diglyceride von gesättigten und ungesättigten Fettsäuren, insbesondere Monoglyceride von Leinöl oder Sonnenblumenöl in Frage. Des weiteren kommen auch ungesättigte Alkohole in Frage, wie mit Allylalkohol (teil-)veretherte polyfunktionelle Hydroxylverbindungen, z.B. Trimethylolethanmonoallylether, Trimethylolethandiallylether, Trimethylolpropanmonoallylether, Trimethylolpropandiallylether, Pentaerythritmonoallylether, Pentaerythritdiallylether, Buten-2-diol-1,4 und alkoxyliertes Buten-2-diol-1,4.

Wenn zur Regulation des Molekulargewichtes monofunktionelle Stoffe eingesetzt werden, sind dies bevorzugt monofunktionelle Alkohole, wie Ethanol, Propanol, Butanol, Hexanol, Decanol, Isodecanol, Cyclohexanol, Benzylalkohol oder Allylalkohol. Unter den Begriff Polyester im Sinne der vorliegenden Erfindung fallen auch Polykondensate, die neben den Estergruppen Amid- und/oder Imidgruppen aufweisen, wie sie durch Mitverwendung von Aminoverbindungen erhalten werden. Solcherart modifizierte Polyester sind z.B. durch die DE-A-15700273 und DE-A-17200323 bekannt. Diese Polyesteramide oder Polyesterimide können besondere Anforderungen, z.B. bezüglich der Wärmestandfestigkeit, der Chemikalienbeständigkeit, der Härte und Kratzfestigkeit häufig besser erfüllen als reine Polyester.

An die Doppelbindungen der verwendeten ungesättigten Polyester kann auch DCPD angelagert werden, wodurch es ermöglicht wird, Endomethylentetrahydrophthalsäurestrukturen gemäß der allgemeinen Formel IV einzubauen.

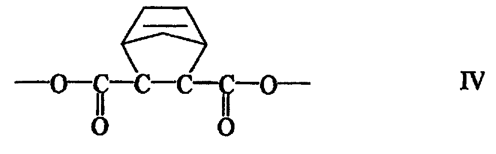

Diese Endomethylentetrahydrophthalsäurestrukturen können an den kettenständigen Doppelbindungen der Polyester und/oder an terminalen Doppelbindungen, wie sie z.B. über Stoffe gemäß der allgemeinen Formel m eingeführt werden, vorhanden sein.

Das Einführen von erfindungsgemäßen Gruppen a) und b) kann durch Cokondensation und/oder durch polymeranaloge Umsetzungen an Polyestern mit funktionellen Gruppen erfolgen. Beispiele für Cokondensationen sind die Mitverwendung von Trimethylolpropandi- und -monoallylether, Pentaerythritdi- und -monoallylether, Buten-2-diol-1,4, alkoxyliertes Buten-2-diol-1,4 und Allylalkohol.

Beispiele für polymeranaloge Umsetzungen an Polyestern mit funktionellen Gruppen sind z.B. Additionen an unvollständig kondensierte lineare und/oder verzweigte prepolymere Polyesterharze, die sowohl freie carboxylgruppen als auch noch freie OH-Gruppen aufweisen. Diese können an den Carboxylgruppen mit ungesättigten Glycidylverbindungen und Vinylethern umgesetzt werden. Bevorzugt werden zunächst die freien Carboxylgruppen mit ungesättigten Glycidylverbindungen umgesetzt, um einer sauer katalysierten Polymerisation der Vinylether vorzubeugen. Geeignete ungesättigte Glycidylverbindungen sind z.B. Glycidyl(meth-)acrylat, Undecensäureglycidylester, (Meth-)-acrylierungsprodukte polyfunktioneller Epoxidharze und/oder Allylglycidether, wobei bevorzugt Glycidyl(meth-)acrylat addiert wird. Im Anschluß an diese Umsetzungen werden dann die Hydroxylgruppen mit Diisocyanaten und Hydroxyvinylethern umgesetzt

Bevorzugt ist es aber zunächst, Diisocyanate mit Isocyanatgruppen unterschiedlicher Reaktivität, z.B. Isophorondiisocyanat, mit einer halbäquivalenten Menge von Hydroxyvinylethern umzusetzen und diese Umsetzungsprodukte dann mit den prepolymeren Polyestern zur Reaktion zu bringen. Bei den genannten Reaktionen können hydroxylfunktionelle Acrylate zusätzlich zu den Hydroxyvinylethern mitverwendet werden. Rein hydroxylfunktionelle prepolymere Polyester können auf die zuletzt beschriebene Weise auch mit Hydroxyvinylethern und hydroxylfunktionellen Verbindungen, die Gruppen b) aufweisen, z.B. Hydroxyalkyl(meth-)acrylaten oder Allylalkohol umgesetzt werden. Die Einführung von Gruppen gemäß der allgemeinen Formel I ist auf diese Weise durch Mitverwendung von kommerziell verfügbarem Dihydrodicyclopentadienol ebenfalls möglich. Bevorzugt ist es aber, Gruppen gemäß der allgemeinen Formel I über die Cokondensation der Halbester von Maleinsäure mit Dihydrodicyclopentadienol gemäß der allgemeinen Formel III in Polyester einzuführen. Diese Halbester sind in einer glatten Reaktion aus Maleinsäureanhydrid (MSA), Wasser und Dicyclopentadien (DCPD) bzw. durch eine direkte Addition von DCPD an MSA erhältlich. Weiter ist es möglich, DCPD direkt an andere Säuren und/oder saure Polyester zu addieren. Diese Reaktionen verlaufen aber meist schlechter und bedürfen der Katalyse z.B. mit BF₃-Etherat.

Weiter ist es z.B. aus US-A-5,252,682 bekannt, daß bei der Reaktion von DCPD und MSA Nebenreaktionen gemäß dem Formelschema V untergeordnet stattfinden können. Diese Nebenprodukte dienen ebenfalls der Einführung von Strukturen gemäß der allgemeinen Formel I.

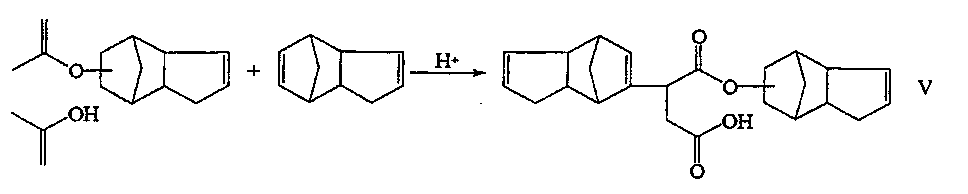

Hydroxyfunktionelle Verbindungen zur Einführung von Gruppen gemäß der allgemeinen Formel I sind Dihydrodicyclopentadienylalkohol und bevorzugt die kostengünstig unter saurer Katalyse zugänglichen Addukte aus DCPD an Glykole gemäß dem Formelschema VI.

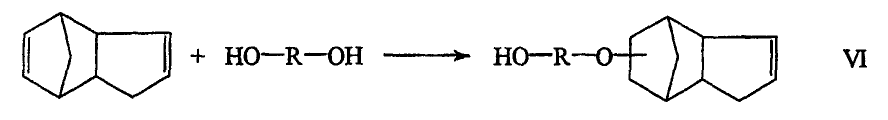

**Polyacrylatharze**, die erfindungsgemäß mit Gruppen a) und b) funktionalisiert sind, stellen eine weitere wichtige erfindungsgemäße Polymerklasse dar und werden durch Copolymerisation von Acrylestern, ggf. mit weiteren copolymerisierbaren Verbindungen, erhalten.

Eine bevorzugte Methode zur Herstellung von Polyacrylaten ist die lösungsmittelfreie, radikalische Substanzpolymerisation im gerührten Reaktor, ggf. unter Druck oder besonders bevorzugt in kontinuierlichen Durchlaufreaktoren bei Temperaturen oberhalb der Schmelztemperatur der gebildeten Polymeren, bevorzugt oberhalb 140°C.

Bei dieser Methode erhält man Polyacrylate mit niedrigem Molekulargewicht und enger Molekulargewichtsverteilung, was bei Pulverlacken wegen des daraus resultierenden engeren Schmelzbereichs und der niedrigeren Schmelzviskosität sehr erwünscht ist. Weiter entfällt bei der Substanzpolymerisation die Notwendigkeit zur Entfernung eines Hilfslösungsmittels, und es ist möglich, Pigmente und Lackhilfsmittel direkt in die Schmelze einzuarbeiten. Die erfindungsgemäßen Polyacrylamarze können aber auch in Lösungsmitteln hergestellt werden.

Als Komponenten zum Aufbau von Polyacrylamarzen sind beispielsweise die bekannten Ester der Acrylsäure und Methacrylsäure mit aliphatischen, cycloaliphatischen, araliphatischen und aromatischen Alkoholen mit 1 bis 40 Kohlenstoffatomen geeignet, wie z.B. Methyl(meth-)acrylat, Ethyl(meth-)acrylat, Propyl(meth-)acrylat, Isopropyl(meth-)acrylat, n-Butyl(meth-)acrylat, Isobutyl(meth-)acrylat, tert.-Butyl(meth-)acrylat, Amyl(meth-)acrylat, Isoamyl (meth-)acrylat, Hexyl(meth-)acrylat, 2-Ethylhexyl(meth-)acrylat, Decyl (meth-)acrylat, Undecyl(meth-)acrylat, Dodecyl(meth)-acrylat, Tridecyl(meth)acrylat, Cyclohexyl(meth-)acrylat, Methylcyclohexyl(meth-)acrylat, Benzyl(meth)acrylat, Tetrahydrofurfuryl(meth-)acrylat, Furfuryl(meth-)acrylat und die Ester der 3-Phenylacrylsäure und deren verschiedenen Isomerieformen, wie Methylcinnamat, Ethylcinnamat, Butylcinnamat, Benzylcinnamat, Cyclo-hexylcinnamat, Isoamylcinnamat, Tetrahydrofurfurylcinnamat, Furfurylcinnamat, Acrylamid, Methacrylamid, Methylolacrylamid, Methylolmethacrylamid, Acrylsäure, Methacrylsäure, 3-Phenylacrylsäure, Hydroxyalkyl(meth-)acrylate, wie Ethylglykolmono(meth-)acrylat, Butylglykolmono(meth-)acrylate, Hexandiolmono(meth-)acrylat, Glycolether(meth-)acrylate, wie Methoxyethylglykolmono(meth-)acrylat, Ethyloxyethylglykolmono(meth-)acrylat, Butyloxyethylglykolmono(meth-)acrylat, Phenyloxyethylglykolmono(meth-)acrylat, Glycidylacrylat, Glycidylmethacrylat, Amino(meth-)acrylate, wie 2-Aminoethyl(meth-)-acrylat.

Als weitere Komponenten kommen radikalisch copolymerisierbare Monomere, wie Styrol, 1-Methylstyrol, 4-tert.Butylstyrol, 2-Chlorstyrol, Vinylester von Fettsäuren mit 2 bis 20 Kohenstoffstomen, wie Vinylacetat, Vinylpropionat, Vinylether von Alkanolen mit 2 bis 20 Kohlenstoffatomen, wie Vinylisobutylether, Vinylchlorid, Vinylidenchlorid, Vinylalkylketone, Diene, wie Butadien und Isopren sowie Ester der Malein- und Crotonsäure in Frage. Geeignete Monomere sind auch cyclische Vinylverbindungen, wie Vinylpyridin, 2-Methyl-1-Vinylimidazol, 1-Vinylimidazol, 5-Vinylpyrrolidon und N-Vinylpyrrolidon. Auch allylisch ungesättigte Monomere können eingesetzt werden, wie z.B. Allylalkohol, Allylalkylester, Monoallylphthalat und Allylphthalat. Auch Acrolein und Methacrolein und polymerisierbare Isocyanate kommen in Frage.

Der Einbau der Vinylethergruppen a) und der coreaktiven Gruppen b) kann durch Copolymerisation bei der Herstellung der Polyacrylate oder bevorzugt durch anschließende polymeranaloge Umsetzung erfolgen. Gut polymerisierbare Verbindungen, die zusätzlich mit Vinylethern reaktiv sind, sind z.B. copolymerisierbare Epoxidverbindungen, wie Glycidyl(meth-)acrylat oder Dihydrodicyclopentadienol(meth-)acrylat, Dihydrodicyclopentadienylethacrylat und Dihydrodicyclopentadienylcinnamat. Die Epoxidgruppen von copolymerisiertem Glycidyl(meth-)acrylat können direkt nach einem kationischen Mechanismus mit Vinylethern polymerisieren, sind aber auch Anker-Gruppen für polymeranaloge Funktionalisierungsreaktionen der Polymeren, z.B. zur Einführung von acrylischen Doppelbindungen durch Umsetzung mit (Meth-)acrylsäure und/oder zur Einführung von Vinylethergruppen durch Umsetzung mit Aminovinyletherverbindungen, wie z.B. Diethanolamindivinylether.

Dihydrodicyclopentadienylgruppen von copolymerisierten Dihydrodicyclopentadienylverbindungen können durch Starten unter UV-Bestrahlung und/oder thermisch mit radikalliefernden Verbindungen direkt mit Vinylethergruppen copolymerisieren bzw. vernetzen.

Grundsätzlich beschränkt sich die Erfindung nicht auf die genannten Polymerklassen. Es kann von Vorteil sein, Mischungen verschiedener Polymerklassen zu verwenden. Besonders bevorzugt sind dabei Mischungen aus relativ weich und elastisch eingestellten, für sich allein keine blockfesten Pulver bildenden Polyurethanharzen oder Polyacrylatharzen mit harten, gut blockfesten Polyesterharzen.

Die genannten verschiedenen Methoden der Funktionalisierung können in beliebiger Kombination in einheitlichen polymeren Vorstufen oder Mischungen unterschiedlicher polymerer Vorstufen durchgeführt werden. So steht eine Art Baukastensystem zur Verfügung, das es erlaubt, die Eigenschaften der Pulverlacke an unterschiedlichste Anforderungen anzupassen.

Die erfindungsgemäßen Bindemittel können auch mit weiteren, mit den Vinylethergruppen a) und/oder den damit coreaktiven Gruppen b) reaktiven und bevorzugt festen Verbindungenn gemischt werden, wie z.B. ungesättigten, bevorzugt teilkristallinen Polyestern, monomeren und/oder polymeren Acrylaten, Vinylestern, Vinylethern, Allylestern und Allylethern, z.B. Polyesteracrylaten, Polyetheracrylaten, Polyurethanacrylaten und Polyurethanvinylethern. Auch in solchen Mischungen wird die störende Sauerstoffinhibierung der Oberfläche in vorteilhafter Weise unterdrückt.

Die Erfindung betrifft auch durch energiereiche Strahlung, bevorzugt UV-Licht und/oder thermisch härtbare Pulverlacke, die das erfindungsgemäße Bindemittel enthalten. Dabei sind die Pulverlacke mit einer überraschend hohen Reaktivität vernetzbar und zeigen auch ohne Coinitiatoren keine Sauerstoffinhibierung der Oberfläche. Weiter sind sie mit thermisch radikalliefernden Verbindungen durch Einbrennen härtbar.

Die Härtung der erfindungsgemäßen Pulverlacke erfolgt mit üblichen Photoinitiatoren vom Norrish I oder II-Typ oder mit Katalysatoren, die thermisch Radikale liefern, wie Peroxiden, Azostartern oder C-C-labilen Verbindungen, wie z.B. solche von Pinakol-Typ. Des weiteren sind Kombinationen, die Malein- und/oder Fumarsäuregruppen aufweisen, in vielen Fällen in lacküblichen Schichtdicken durch Einbrennen an Luft härtbar.

Besonders bevorzugt sind als Fotoinitiatoren copolymer gebundene Fotoinitiatoren. Als copolymere Fotoinitiatoren können z.B. copolymersierbare Abkömmlinge des Benzophenons und Verbindungen, die aus der EP-A-486 897, DE-A-38 20 463, DE-A-40 07 318 bekannt sind und insbesondere solche Verbindungen umfassen, die von aromatischen oder teilaromatischen Ketonen abgeleitet sind und Thioxanthonstrukturen aufweisen, verwendet werden. Auch durch Addition von z.B. Hydroxybenzophenon an copolymerisierte Epoxidverbindungen, wie z.B. Glycidyl(meth-)acrylat, können copolymere Fotoinitiatoren eingebaut werden. Insbesondere Polymere, die z.B. copolymer gebundene Benzophenongruppen aufweisen, sind mit hoher Empfindlichkeit UV vernetzbar. Diese Reaktivität wird weiter erhöht, wenn gleichzeitig Struktureinheiten der allgemeinen Formel I als funktionelle Gruppe b) vorhanden sind.

Die erfindungsgemäßen Pulverlacke können Verbindungen enthalten, die thermisch oder unter energiereicher Strahlung Radikale und/oder Kationen zur Verfügung stellen. Entsprechend kann die Härtung rein thermisch, z.B. durch Einbrennen an Luft und/oder durch energiereiche Strahlung mit Startern, wie Peroxiden, Azostartern oder C-C-labilen Verbindungen erfolgen.

Die Erfindung betrifft ebenfalls die Verwendung der erfindungsgemäßen Pulverlacke zur Beschichtung und/oder Lackierung von Oberflächen. Diese Oberflächen können ganz allgemein flächige oder geformte sowie faser- oder partikelartige Substrate aus beliebigen Materialien, wie Metall, Holz, Kunststoff, Glas, Keramik, Silizium und anderes mehr sein. Die Auswahl der zu kombinierenden polymeren Grundstruktur sowie der coreaktiven Gruppen b) für das Bindemittel des jeweiligen Pulverlacks erfolgt entsprechend den Ansprüchen der vorgesehenen Verwendung so, daß die fertigen Lackbeschichtungen den gestellten Anforderungen genügen. Dabei sind die Grundprinzipien bei der Auswahl der polymeren Grundstruktur und den coreaktiven Gruppen b) der zugrundeliegenden Monomere zur Einstellung der Basiseigenschaften der Lacke dem Polymer-Chemiker und dem Fachmann bekannt.

Die an die fertigen Lackbeschichtungen gestellten Anforderungen können recht unterschiedlich sein. Z.B. werden für klare Decklacke von Metallic-Lackierungen bei Automobilen höchste Vergilbungs- und Witterungsbeständigkeit, Kratzfestigkeit und Glanzhaltung bei hoher Härte gefordert.

Bei einem coil-coat-Lack, d.h. einem Lack mit dem Blechbahnen lackiert, dann aufgewickelt und später unter Verformung weiterverarbeitet werden, kommt es auf höchste Elastizität und Haftung an. Auch der Preis der Monomere kann ein Auswahlkriterium sein, wenn für bestimmte Anwendungen keine hohe Qualität der Lackierungen, dafür aber ein niedriger Preis gefordert wird.

So kann z.B. die Härte, die Glasübergangstemperatur und die Erweichungstemperatur der Polymeren durch höhere Anteile an "harten" Monomeren, wie z.B. Styrol oder den (Meth-)acrylaten von C1 bis C3-Alkoholen, erhöht werden, während z.B. Butylacrylat, Ethylhexylacrylat oder Tridecylacrylat als "weiche" Monomere diese Eigenschaften erniedrigen, dafür aber die Elastizität verbessern. Untergeordnete Anteile an (Meth-)acrylsäure oder (Meth-)acrylamid verbessern die Haftung.

Die Einflüsse des Molekulargewichts und die Molekulargewichtsverteilung, die Steuerung der Polymerisation durch Regler, Temperaturfühlung und Katalysatorauswahl sind grundsätzlich bekannt.

Monomere, die außer der Doppelbindung weitere funktionelle Gruppen tragen, können auch für eine zusätzliche thermisch aktivierbare Vernetzungsreaktion verwendet werden. In der Regel werden sie aber in untergeordneten Mengen eingesetzt und verbessern dann z.B. die Haftung, die elektrostatische Aufladbarkeit, das Fließverhalten der Lacke und die Oberflächenglätte. Abkömmlinge der 3-Phenylacrylsäuren verbessern weiter als eingebaute Stabilisatoren die Witterungsbeständigkeit der Lackierungen.

Die Lackzubereitungen können außerdem übliche Lackhilfsmittel, wie Verlaufshilfsmittel, Entlüftungshilfsmittel, sonstige Netz- und Dispergiermittel, Farbund Füllstoffe enthalten. Auch wäßrige Dispersionen der Lackpulver, sog. Powderslurries, sind möglich, um die Pulverlacke einer Flüssigapplikation zugänglich zu machen.

Im folgenden soll die Erfindung anhand von Beispielen näher erläutert werden:

### Beispiele

### Vorstufe 1

### (Herstellung einer Monocarbonsäure gemäß dem Formelschema V)

In einem Rührkolben mit Heizung und Rückflußkühler werden

| | | |
|---|---|---|
| 710,80 g | Dicyclopentadien, 93%ig | (5,0 Mol) und |
| 490,30 g | Maleinsäureanhydrid | (5,0 Mol) |

eingewogen.

Die Mischung wird unter einem leichten Stickstoffstrom auf 125°C erhitzt. Dann werden über einen Tropftrichter innerhalb einer Stunde

| | | |
|---|---|---|
| 95,00 g | Wasser | (5,0 Mol + 5 g) |

zugegeben. Es wird bei 125°C eine Stunde nachreagieren gelassen, wobei sich eine Monocarbonsäure gemäß der allgemeinen Formel V bildet. Der Stoff ist zunächst flüssig, beginnt aber allmählich zu kristallisieren.

### Vorstufe 2

### (Herstellung eines Isophorondiisocyanat/Vinylether-Addukts)

In einem Rührkolben mit Heizung und Rückflußkühler werden

| | | |
|---|---|---|
| 222 g | Isophorondiisocyanat (IPDI) | 1,0 Mol |
| 0,34 g | Dibutylzinndilaurat (Katalysator) | |

eingewogen.

Diese Vorlage wird auf 60°C geheizt und als Zulauf

| | | |
|---|---|---|
| 116g | 1,4-Butandiolmonovinylether | 1,0Mol |

in einer Stunde zugefahren. Es erfolgt eine exotherme Reaktion, wobei die Temperatur durch Gegenkühlen bei 60°C gehalten wird. Nach dem ZulaufEnde wird eine weitere Stunde bei 60°C nachgerührt. Es resultiert ein viskoses Harz mit einem NCO-Gehalt von 12,9%.

### Vorstufe 3

### (Herstellung eines Isophorondiisocyanat/Acrylester-Addukts)

In einem Rührkolben mit Heizung und Rückflußkühler werden

| | | |
|---|---|---|
| 222,00 g | Isophorondiisocyanat (IPDI) | (1 Mol) |
| 0,34 g | Dibutylzinndilaurat (Katalysator) | |
| 0,33 g | tert. Butylkresol (Polymerisationsinhibitor) | |
| 0,33 g | Hydrochinonmonomethylether (Polymerisationsinhibitor) | |
| 0,33 g | Phenothiazin (Polymerisationsinhibitor) | |

eingewogen.

Diese Vorlage wird auf 60°C geheizt und als Zulauf

| | | |
|---|---|---|
| 116 g | Hydroxyethylacrylat (HEA) | (1,0 Mol) |

in einer Stunde zugefahren. Es erfolgt eine exotherme Reaktion, wobei die Temperatur durch Gegenkühlen bei 60°C gehalten wird. Nach Zulaufende wird eine weitere Stunde bei 60°C nachgerührt.
Es resultiert ein viskoses Harz mit einem NCO-Gehalt von 13,2%.

### Beispiel 1: Ungesättigter Polyester mit Vinylethergruppen, Acrylestergruppen und Strukturen b) gemäß der allgemeinen Formel I

In einem Laborrührkessel mit Ankerrührer und Mantelheizung/Kühlung sowie einem Destillieraufsatz werden

| | | |
|---|---|---|
| 240,00 g | Dicyclohexanolpropan | (1 Mol) |
| 236,00 g | Hexandiol 1,6 | (2 Mol) |
| 194,00 g | Dimethylterephthalat | (1 Mol) |
| 0,67 g | Zinnacetat | |

eingewogen.

Es wird unter einem leichten Stickstoffstrom rasch auf 120°C geheizt und die Temperatur dann innerhalb von 3 Stunden stufenweise auf 190°C erhöht, wobei das entstehende Kondensat abdestilliert wird.

Der Kolbeninhalt wird auf 90°C abgekühlt, und dann werden

| | | |
|---|---|---|
| 516,80 g | Vorstufe 1 | (2,0 Mol) |
| 116,00 g | Fumarsäure | (1,0 Mol) |
| 120,00 g | Dicyclohexanolpropan | (0,5 Mol) |
| 4,00 g | Dibutylzinndilaurat | |
| 0,50 g | Hydrochinon | |

zugegeben.

Es wird unter einem leichten Stickstoffstrom rasch auf 130°C aufgeheizt und die Temperatur dann innerhalb von 6 Stunden allmählich auf 190°C erhöht, wobei das entstehende Kondensationswasser abdestilliert wird. Es wird ein Harz mit einer Säurezahl von 4 und einer OH-Zahl von 47 erhalten. Die Harztemperatur wird auf 85°C gesenkt und in die dann viskose aber noch rührbare Schmelze

| | |
|---|---|
| 160 g | Vorstufe 2 und |
| 160 g | Vorstufe 3 |

rasch zugegeben. Dabei sinkt die Viskosität deutlich ab, und es wird eine leicht exotherme Reaktion beobachtet (Temperaturanstieg in 30 Min. auf ca. 90°C). Es wird dann bei ca. 85°C noch 2 Std. nachreagieren gelassen, wobei die Viskosität deutlich ansteigt, und es ist kein freies Isocyanat mehr nachweisbar. In die Schmelze werden dann innerhalb von 10 Min.

| | |
|---|---|
| 45 g Benzildimethylketal | (Fotoinitiator) |
| 8 g Benzoin | (Entgasungshilfsmittel) und |
| 10 g Modaflow Powder III | (kommerzielles Verlaufshilfsmittel, Monsanto) |

eingerührt und die Harzschmelze aus dem Bodenventil des Kessels mit leichtem Stickstoffdruck auf Aluminiumfolie entleert. Beim Abkühlen erstarrt die Schmelze zu einem harten mahlbaren Harz.

### Beispiel 2:

### Polyester mit Vinylethergruppen und Strukturen b) gemäß der allgemeinen Formel I

Es wird wie bei Beispiel 1 verfahren, aber anstelle einer Mischung aus Vorstufe 2 und 3 wird mit 320 g Vorstufe 2 umgesetzt.

### Beispiel 3: Ungesättigter Polyester mit Vinylether- und Acrylestergruppen

In einem Laborrührkessel mit Ankerrührer und Mantelheizung/Kühlung und mit Destillieraufsatz werden

| | | |
|---|---|---|
| 240,00 g | Dicyclohexanolpropan | (1 Mol) |
| 236,00 g | Hexandiol-1,6 | (2 Mol) |
| 194,00 g | Dimethylterephthalat | (1 Mol) |
| 0,67 g | Zinnacetat | |

eingewogen.

Es wird unter einem leichten Stickstoffstrom rasch auf 120°C aufgeheizt und die Temperatur dann innerhalb von 3 Stunden stufenweise auf 190°C erhöht, wobei das entstehende Kondensationswasser abdestilliert wird.

Der Kolbeninhalt wird auf 90°C abgekühlt und dann werden

| | | |
|---|---|---|
| 146,00 g | Adipinsäure | (2 Mol) |
| 116,00 g | Fumarsäure | (1 Mol) |
| 120,00 g | Dicyclohexanolpropan | (0,5 Mol) |
| 119,00 g | Hexanoldiol 1,6 | (1,0 Mol) |
| 4,00 g | Dibutylzinndilaurat (DBTL) | |
| 0,50 g | Hydrochinon | |

zugegeben.

Es wird unter einem leichten Stickstoffstrom rasch auf 130°C aufgeheizt und die Temperatur dann innerhalb von 6 Stunden allmählich auf 190°C erhöht, wobei das entstehende Kondensationswasser abdestilliert wird. Es wird ein Harz mit einer Säurezahl von 6 und einer OH-Zahl von 59 erhalten. Die Harztemperatur wird auf 85°C gesenkt und in die dann viskose aber noch rührbare Schmelze

| | |
|---|---|
| 160 g | Vorstufe 2 |
| 160 g | Vorstufe 3 |

rasch zugegeben. Dabei sinkt die Viskosität deutlich ab, und es wird eine leicht exotherme Reaktion beobachtet (Temperaturanstieg in 30 Min. auf ca. 90°C). Es wird dann bei ca. 85°C noch etwa 2 Std. nachreagieren gelassen, wobei die Viskosität deutlich ansteigt, und es ist kein freies Isocyanat mehr nachweisbar. In die Schmelze werden dann 10. Min. lang

| | | |
|---|---|---|
| 45 g | Benzildimethylketal | (Fotoinitiator) |
| 8 g | Benzoin | (Entgasungshilfsmittel) und |
| 10 g | Modaflow Powder III | (kommerzielles Verlaufshilfsmittel, Monsanto) |

eingerührt und die Harzschmelze aus dem Bodenventil des Kessels mit leichtem Stickstoffdruck auf eine Aluminiumfolie entleert. Beim Abkühlen erstarrt die Schmelze zu einem harten mahlbaren Harz.

### Beispiel 4: Polyester mit Vinylether- und Acrylestergruppen

In einem Laborrührkessel mit Ankerrührer und Mantelheizung/Kühlung und mit Destillieraufsatz werden

| | | |
|---|---|---|
| 240,00 g | Dicyclohexanolpropan | (1 Mol) |
| 236,00 g | Hexandiol 1,6 | (2 Mol) |
| 194,00 g | Dimethylterephthalat | (1 Mol) |
| 0,67 g | Zinnacetat | |

eingewogen.

Es wird unter einem leichten Stickstoffstrom rasch auf 120°C aufgeheizt und die Temperatur innerhalb von 3 Stunden stufenweise auf 190°C erhöht, wobei das entstehende Kondensationswasser abdestilliert wird.

Der Kolbeninhalt wird auf 90°C abgekühlt und dann werden

| | | |
|---|---|---|
| 219,00 g | Adipinsäure | (3,0 Mol) |
| 120,00 g | Dicyclohexanolpropan | (0,5 Mol) |
| 119,00 g | Hexandiol 1,6 | (1,0 Mol) |
| 4,00 g | Dibutylzinndilaurat (DBTL) | |
| 0,50 g | Hydrochinon | |

dazugegeben.

Es wird unter einem leichten Stickstoffstrom rasch auf 130°C aufgeheizt und die Temperatur innerhalb von 6 Stunden allmählich auf 190°C erhöht, wobei das entstehende Kondensationswasser abdestilliert wird. Es wird ein Harz mit einer Säurezahl von 6 und einer OH-Zahl von 56 erhalten. Die Harztemperatur wird auf 85°C gesenkt und in die dann viskose, aber noch rührbare Schmelze

| | |
|---|---|
| 70 g | Vorstufe 2 und |
| 70 g | Vorstufe 3 |

rasch zugegeben. Dabei sinkt die Viskosität deutlich ab, und es wird eine leicht exotherme Reaktion beobachtet (Temperaturanstieg in 30 Min. auf ca. 90°C). Es wird dann bei ca. 85°C noch 2 Std. nachreagieren gelassen, wobei die Viskosität deutlich ansteigt, und es ist kein freies Isocyanat mehr nachweisbar. In die Schmelze werden dann 10 Min. lang

| | |
|---|---|
| 45 g Benzildimethylketal | (Fotoinitiator) |
| 8 g Benzoin | (Entgasungshilfsmittel) und |
| 10 g Modaflow Powder III | (kommerzielles Verlaufsmittel, Monsanto) |

eingerührt und die Harzschmelze aus dem Bodenventil des Kessels mit leichtem Stickstoffdruck auf eine Aluminiumfolie entleert. Die Schmelze ist deutlich niedrigviskoser als bei den Beispielen 1 und 2. Beim Abkühlen erstarrt die Schmelze zu einem harten mahlbaren Harz.

### Beispiel 5: Polyepoxidharz mit Vinylether- und Acrylestergruppen

In einem Laborrührkessel mit Ankerrührer und Mantelheizung/Kühlung sowie einem Rückflußkühler werden

| | |
|---|---|
| 1146g | Epikote 828 (Shell, Bisphenol A-Bisglycidylharz) |
| 216 g | Acrylsäure |
| 15 g | Triphenylphosphin |
| 1,5g | Hydrochinonmonomethylether |

eingewogen und unter Stickstoff wird auf 70°C erwärmt. Dabei setzt eine leicht exotherme Reaktion ein, die zu einer Erwärmung auf 90°C führt und nach etwa 60 Min. abklingt. Es wird weitere 120 Min. bei 80°C gerührt, danach ist die Säurezahl auf < 1 gesunken. In das Harz werden dann bei 80°C innerhalb von einer Stunde unter exothermer Reaktion

| | |
|---|---|
| 475 g | Diethanolamindivinylether |

zugetropft. Es wird noch 30 Min. bei 80-85°C nachgerührt. Es resultiert eine viskose Harzschmelze, zu welcher

| | |
|---|---|
| 40 g | Benzildimethylketal (Fotoinitiator) und |
| 6 g | Benzoin (Entgasungshilfsmittel) |

zugegeben und 10 Min. lang eingerührt werden. Dann wird die Harzschmelze aus dem Bodenventil des Kessels mit leichtem Stickstoffdruck auf eine Aluminiumfolie entleert. Beim Abkühlen erstarrt die Schmelze zu einem harten mahlbaren Harz.

### Prüfung der Beispiele

Proben der Harze laut den Beispielen 1, 2 und 3 werden in einer Labormühle zu feinen Pulvern gemahlen. Die Pulver werden mit einem Handsieb auf entfettete Stahlbleche in einer solchen Menge aufgestreut, daß nach den Erfahrungen ca. 30-50 im dicke Lackschichten erhalten werden. Die Stahlblechtafeln wurden danach auf einer Heizplatte mit 140°C Oberflächentemperatur 10 Min. lang gelagert. Danach waren die aufgestreuten Pulverschichten zu klaren Harzschichten verschmolzen. Über der Heizplatte war mit einem Abstand von 30 cm zur Harzoberfläche eine UV-Licht-Quecksilberdampflampe mit einem Emissionsmaximum bei ca. 365 nm und einer Energieleistung von 24 mJ/cm² in der Ebene der Belichtung angebracht. Beim Aufschmelzen der Pulverbeläge war die Lampe eingeschaltet und mit einem Schieber verschlossen. Nach dem Schmelzen der Pulverbeläge wurde der Schieber für 20 Sekunden geöffnet und dann wieder geschlossen. Die Prüftafeln wurden von der Heizplatte genommen und abkühlen gelassen. Es resultierten harte farblose bis leicht gelblich gefärbte Lackschichten, die unter einem acetonfeuchten Wattebausch nach 10 Min. noch ohne Angriff blieben.

## Patentansprüche

1. Bindemittel für durch energiereiche Strahlung und/oder thermisch härtbare Pulverlacke mit einer oligomeren oder polymeren Grundstruktur, die jeweils end- und/oder seitenständig mindestens eine Vinylethergruppe a) und mindestens eine von den Vinylethergruppen a) verschiedene, mit den Gruppen a) coreaktive Gruppe b) aufweist, wobei im Durchschnitt mindestens eine Vinylethergruppe a) und eine coreaktive Gruppe b) pro Oligomer- oder Polymermolekül vorhanden sind.

2. Bindemittel nach Anspruch 1, dadurch gekennzeichent, daß die coreaktiven Gruppen b) mit den Vinylethergruppen a) copolymerisierbar sind.

3. Bindemittel nach Anspruch 1 oder 2, **dadurch gekennzeichnet, daß** die oligomere oder polymere Grundstruktur durch C-C-Verknüpfungen gebildet ist, die Doppel- und/oder Dreifachbindungen aufweisen und/oder ausgewählt sind aus Ester-, Ether-, Urethan-, Amid-, Imid-, Imidazol-, Keton,- Sulfid-, Sulfon-, Azetal-, Harnstoff-, Carbonat- und Siloxanverknüpfungen.

4. Bindemittel nach einem der Ansprüche 1 bis 3, **dadurch gekennzeichnet, daß** die oligomere oder polymere Grundstruktur linear, verzweigt, ringförmig oder dendrimer aufgebaut ist.

5. Bindemittel nach einem der Ansprüche 1 bis 4, **dadurch gekennzeichnet, daß** die coreaktiven Gruppen b) ausgewählt sind aus Maleinat-, Fümarat-, (Meth)acrylat-, Allyl-, Epoxid-, Alkenyl-, Cycloalkenyl-, Vinylaryl- und Cinnamatgruppen und/oder Struktureinheiten der allgemeinen Formel I aufweisen.

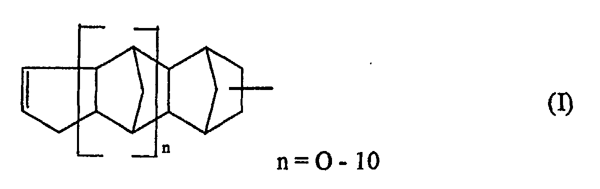

6. Bindemittel nach Anspruch 5, **dadurch gekennzeichnet, daß** die Struktureinheiten der allgemeinen Formel I in den coreaktiven Gruppen b) in Form von Estern des (Oligo)-dihydrodicyclopentadienols mit Mono- oder polyfunktionellen Carbonsäuren gemäß der allgemeinen Formel II eingebaut sind.

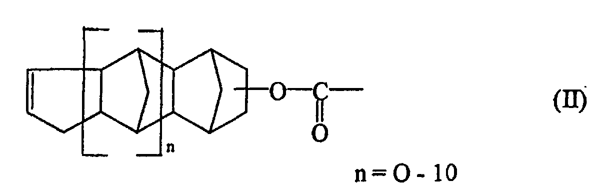

7. Bindemittel nach Anspruch 5 oder 6, **dadurch gekennzeichnet, daß** die Struktureinheiten der allgemeinen Formeln I und II in den coreaktiven Gruppen b) in Form von (Oligo)-dihydrodicyclopentadienolhalbestem der Maleinsäure und Fumarsäure gemäß der allgemeinen Formel III eingebaut sind und die Verbindung zur Grundstruktur über Ester- und/oder Amidgruppen hergestellt ist.

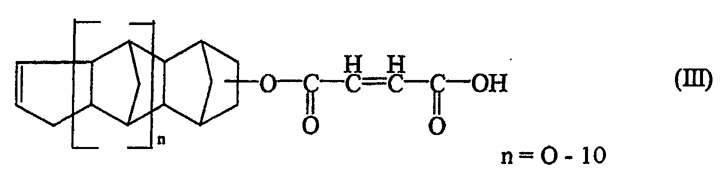

8. Durch energiereiche Strahlung und/oder thermisch härtbare Pulverlacke, die ein Bindemittel gemäß einem der Ansprüche 1 bis 7 enthalten.

9. Pulverlacke nach Anspruch 8, **dadurch gekennzeichnet, daß** sie copolymer eingebaute Fotoinitiatoren aufweisen.

10. Pulverlacke nach Anspruch 8 oder 9, **dadurch gekennzeichnet, daß** sie Verbindungen enthalten, die thermisch oder unter energiereicher Strahlung Radikale und/oder Kationen zur Verfügung stellen.

11. Verwendung der Pulverlacke gemäß einem der Ansprüche 8 bis 10 zur Beschichtung und/oder Lackierung von Oberflächen.

12. Verwendung nach Anspruch 11 als Decklack von Automobilen.

13. Verwendung nach Anspruch 11 als coil-coat-Lack.

## Claims

1. A binder for powder coating materials having an oligomeric or polymeric substructure which are curable thermally and/or by means of high-energy radiation, said binder comprising in each case terminally and/or laterally at least one vinyl ether group a) and at least one group b) which is different from the vinyl ether groups a) but is coreactive with said groups a), there being on average at least one vinyl ether group a) and one coreactive group b) per oligomer or polymer molecule.

2. A binder as claimed in claim 1, wherein the coreactive groups b) are copolymerizable with the vinyl ether groups a).

3. A binder as claimed in claim 1 or 2, wherein the oligomeric or polymeric substructure is formed of C-C linkages which have double and/or triple bonds and/or are selected from ester, ether, urethane, amide, imide, imidazole, ketone, sulfide, sulfone, acetal, urea, carbonate and siloxane linkages.

4. A binder as claimed in any of claims 1 to 3, wherein the oligomeric or polymeric substructure is linear, branched, annular or dendrimeric.

5. A binder as claimed in any of claims 1 to 4, wherein the coreactive groups b) are selected from maleate, fumarate, (meth)acrylate, allyl, epoxy, alkenyl, cycloalkenyl, vinylaryl and cinnamate groups and/or structural units of the formula I.

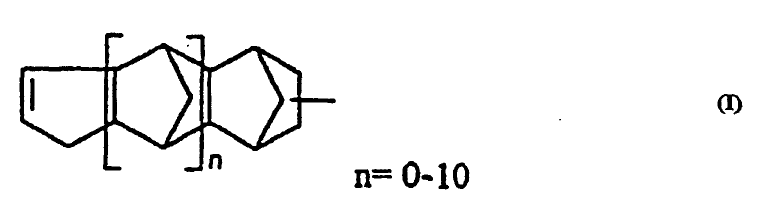

6. A binder as claimed in claim 5, wherein the structural units of the formula I in the coreactive groups b) are incorporated in the form of esters of (oligo)dihydrodicyclopentadienol with monofunctional or polyfunctional carboxylic acids of the formula II.

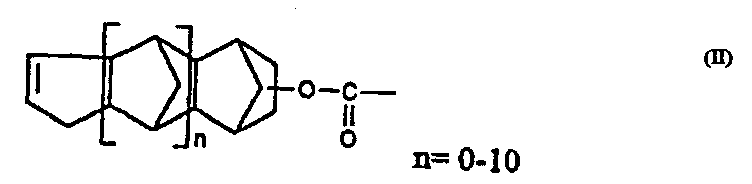

7. A binder as claimed in claim 5 or 6, wherein the structural units of the formula I and II in the coreactive groups b) are incorporated in the form of (oligo)dihydrodicyclopentadienol monoesters of maleic acid and fumaric acid, of the formula III, and the link to the substructure is produced by way of ester groups and/or amide groups.

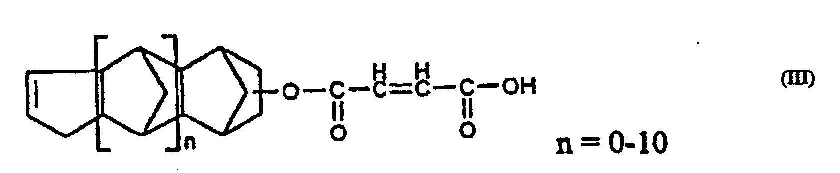

8. A powder coating material curable thermally and/or by means of high-energy radiation, which comprises a binder as claimed in any of claims 1 to 7.

9. A powder coating material as claimed in claim 8, which comprises copolymerically incorporated photoinitiators.

10. A powder coating material as claimed in claim 8 or 9, which comprises compounds which, thermally or under high-energy radiation provide free radicals and/or cations.

11. The use of a powder coating material as claimed in any of claims 8 to 10 for coating surfaces.

12. The use as claimed in claim 11 as an automotive top coat.

13. The use as claimed in claim 11 as a coil coating material.

## Revendications

1. Liant pour laques en poudre, durcissables par un rayonnement hautement énergétique et/ou par voie thermique, présentant une structure fondamentale oligomère ou polymère comprenant au moins un groupe éther vinylique a) terminal et/ou latéral et au moins un groupe b) terminal et/ou latéral qui est différent du groupe a) et qui est co-réactif avec les groupes a), liant présentant en moyenne au moins un groupe éther vinylique a) et un groupe co-réactif b) par molécule oligomère ou polymère.

2. Liant selon la revendication 1, **caractérisé en ce que** les groupes co-réactifs b) sont copolymérisables avec les groupes éther vinylique a).

3. Liant selon la revendication 1 ou 2, **caractérisé en ce que** la structure fondamentale oligomère ou polymère est constituée par des jonctions C-C qui présentent des liaisons doubles et/ou triples et/ou qui sont choisies dans le groupe formé par les jonctions ester, éther, uréthane, amide, imide, imidazole, cétone, sulfure, sulfone, acétal, urée, carbonate et siloxane.

4. Liant selon une quelconque des revendications 1 à 3, **caractérisé en ce que** la structure fondamentale oligomère ou polymère est une structure linéaire, ramifiée, cyclique ou dendrimère.

5. Liant selon une quelconque des revendications 1 à 4, **caractérisé en ce que** les groupes co-réactifs b) sont choisis parmi les groupes maléinate, fumarate, (méth)acrylate, allyle, époxyde, alcényle, cycloalcényle, vinylaryle et cinnamate et/ou qu'ils présentent des unités structurelles de formule générale I.

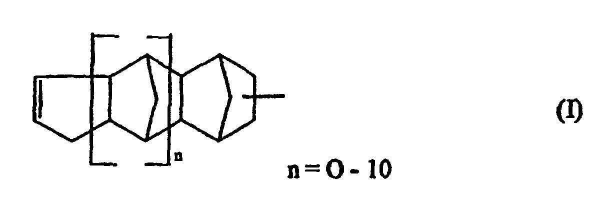

6. Liant selon la revendication 5, **caractérisé en ce que** les unités structurelles de formule générale I sont incorporées dans les groupes co-réactifs b) sous forme d'ester du (oligo)-dihydrodicyclopentadiénol et des acides carboxyliques monofonctionnels ou polyfonctionnels selon la formule générale II.

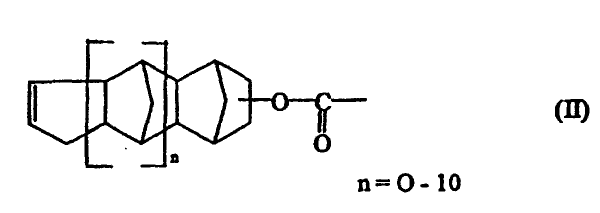

7. Liant selon la revendication 5 ou 6, **caractérisé en ce que** les unités structurelles de formules générales I et II sont incorporées dans les groupes co-réactifs b) sous forme d'hémi-esters de l'(oligo)-dihydrodicyclopentadiénol et de l'acide maléique ou de l'acide fumarique selon la formule générale III, et **en ce que** la liaison avec la structure fondamentale est réalisée par des groupes ester et/ou amide.

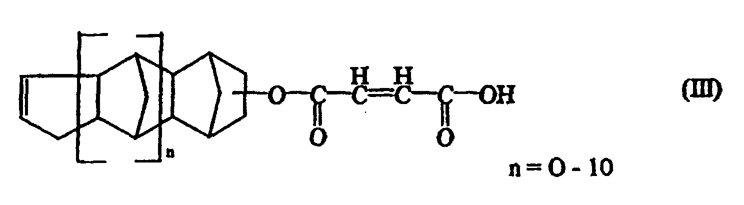

8. Laques en poudre durcissables par un rayonnement hautement énergétique et/ou par voie thermique, contenant un liant selon l'une quelconque des revendications 1 à 7.

9. Laques en poudre selon la revendication 8, **caractérisées en ce qu'**elles présentent des photoamorceurs incorporés à l'état copolymérisé.

10. Laques en poudre selon la revendication 8 ou 9, **caractérisées en ce qu'**elles comprennent des composés qui sont, sous l'effet thermique ou de rayonnement hautement énergétique, donneurs de radicaux libres et/ou de cations.

11. Mise en oeuvre des laques en poudre selon une quelconque des revendications 8 à 10 pour le revêtement et/ou pour le laquage de surfaces.

12. Mise en oeuvre selon la revendication 11 en tant que couche d'émail de finition pour automobiles.

13. Mise en oeuvre selon la revendication 11 en tant que laque de prélaquage.
